# EUROPEAN PATENT APPLICATION

(11) **EP 1 741 346 A1**
(43) Date of publication of application: **10.01.2007**
(21) Application number: 06386005.0
(22) Date of filing: 27.03.2006
(51) Int. Cl.: A23G 9/28

(54) **Distributor of soft ice cream**

(30) Priority: 05.07.2005 GR 2005100344
(71) Applicant: Evangelos, Savvidis, T.K. 50200 N. Kozanis (GR)
(72) Inventor: Evangelos, Savvidis, T.K. 50200 N. Kozanis (GR)

(57) **Abstract**

Selecting the flavour and the quantity of each flavour by one lever when it comes to mixed ice-cream.

The cylinder is divided into two transversal, independent parts.

## Description

This invention is referring to an accessory for soft ice-cream machines which allows the operator of the machine to select the proper quantity and flavor by using only one lever.

Up to now, three levers were installed in ice cream machines in order to produce three flavors, using the two sided levers for the provisioning of one plain flavor each (e.g. plain vanilla or plain chocolate), whereas the third - middle lever- was used for the providing of mixed flavor.

That was achieved by the individual co-operation of each sided lever with a corresponding tube and by pulling the lever a passage was released providing a particular flavor, while for mixed flavor, the middle lever was co-operating simultaneously with both tubes providing a mixed flavor.

By this invention the two sided levers are abolished and a single lever allows the operator of the ice-cream machine to serve any flavor in particular or a mixed flavor. In addition this single lever allows the operator to serve mixed flavor selecting the proper amount of each flavor according to his will.

That is achieved by the along division in two parts of the inner cylinder of the lever, thus resulting to an independent movement of each part of the inner divided cylinder.

The ultimate benefit is the cost reduction in the machine production and at the same time faster and more accurate serving - in terms of quantity - since a single lever can provide any flavor we desire, even a mixed one, in any proportion we need.

The way this invention is functioning is described in the drawings below:
Drawing 1: We can see the two parts (a) (e.g. vanilla) and (b) (e.g. chocolate) of the cylinder in inactivity thus resulting to none released passage.
Drawing 2: We can see part (a) activated and part (b) in inactivity thus resulting to provision of only one flavor (e.g. vanilla only)
Drawing 3: We can see the reverse result of drawing 2
Drawing 4: We can see both parts of the divided cylinder activated -both passages released, resulting the provisioning (a1)(e.g. vanilla) and (b1)(e.g. chocolate) providing mixed flavor.

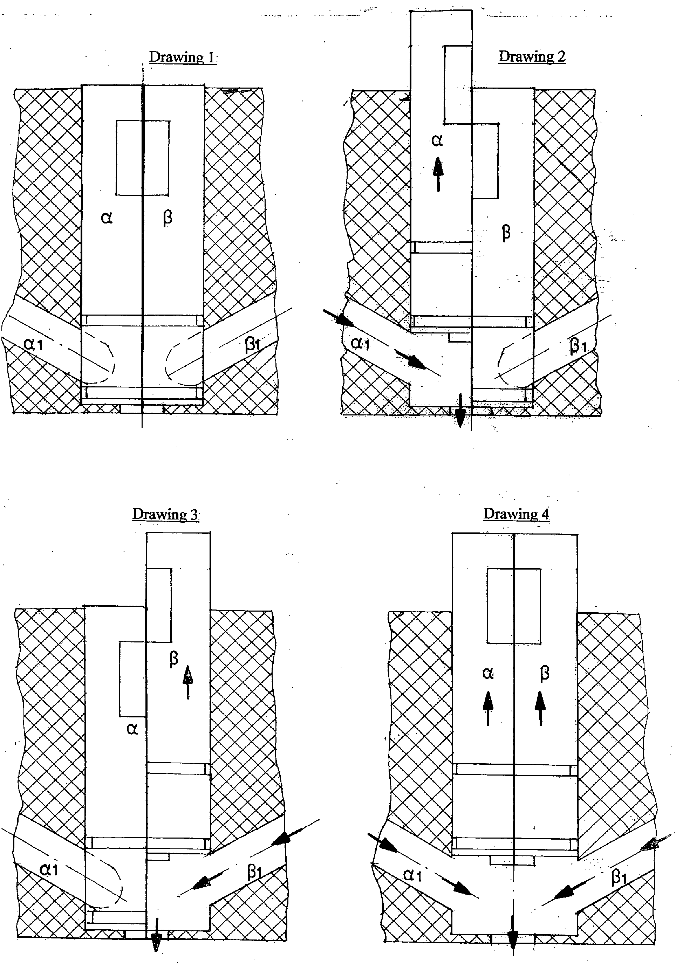

## Claims

1. The distributor of quantity and of flavour of ice-cream is consisted of a cylinder divided in two transversal and independent parts, the cylinder functions for the equal-quantity distribution of quantity and of flavour of ice-cream, whereas each part of the cylinder functions selectively and independently and corresponds to a specific container of flavour of ice-cream, so that by its pulling to preselect the proportionate quantity and flavour of ice-cream out of the corresponding container, during the functioning the two parts are in their primary position having shut down the passages (a1) and (b1) of the ice-cream. When we raise the one (a) of the two parts, the one passage (a1) opens, so we serve the one of the two flavours. When we raise the (b) of the two parts the passage (b1) opens, so we serve the other flavours of the ice-cream. Finally, when we raise both parts (a & b) of the cylinder we can serve from both of the two flavours of the ice-cream simultaneously. According to the desirable flavour and quantity of the ice-cream we raise more or less some of the two parts of the cylinder and we succeed in the quantity of each flavour the mixed ice-cream will contain.
